# EUROPÄISCHE PATENTSCHRIFT

(11) **EP 2 161 456 B1**
(45) Veröffentlichungstag und Bekanntmachung des Hinweises auf die Patenterteilung: **07.03.2018**
(21) Anmeldenummer: 09010098.3
(22) Anmeldetag: 05.08.2009
(51) Int. Cl.: F04D 15/00, F04D 13/06

(54) **Kreiselmotorpumpe mit Drehzahleinstellung**
Motor pump with rotation speed adjustment
Pompe centrifuge dotée d'un réglage de la vitesse

(30) Priorität: 03.09.2008 DE 102008045651
(43) Veröffentlichungstag der Anmeldung: 10.03.2010
(73) Patentinhaber: WILO SE, 44263 Dortmund (DE)
(72) Erfinder: Bordier, Stéphane, 18410 Argent sur Sauldr (FR); Marko, Armin, 45500 Gien (FR); Germain, Eric, 18410 Argent Sur Sauldre (FR)
(74) Vertreter: Cohausz Hannig Borkowski Wißgott

(56) Entgegenhaltungen:
- EP-A1- 0 351 272
- DE-A1- 10 232 281

## Beschreibung

Die Erfindung betrifft eine Kreiselmotorpumpe mit mindestens zwei am Elektromotor angeordneten, von außen zugänglichen elektrischen Anschlüssen, auf denen ein Kabelstecker befestigbar ist.

Es ist bekannt, siehe z,B. die DE 33 42 967 A1, bei Kreiselmotorpumpen einen Drehschalter anzuordnen, um die gewünschte Drehzahl des Elektromotors einzustellen. Ein solcher Drehschalter bedeutet einen zusätzlichen technischen Aufwand und benötigt zudem zusätzlich Platz am Klemmenkasten.

Aufgabe der Erfindung ist es, eine Kreiselmotorpumpe der eingangs genannten Art so zu verbessern, dass die Drehzahl des Elektromotors einstellbar ist bei geringem technischen Aufwand, einfacher, sicherer Handhabung und geringem Platzaufwand.

Diese Aufgabe wird erfindungsgemäß dadurch gelöst, dass an oder nahe der elektrischen Anschlüsse ein Schiebeschalter oder ein Steckkontakt befestigt ist, durch den die Drehzahl des Elektromotors einstellbar ist und dass der Kabelstecker die elektrischen Anschlüsse und den Schiebeschalter oder den Steckkontakt überdeckt.

Eine solche technische Lösung führt zu folgenden Vorteilen:
- Ein geringer technischer Aufwand,
- geringe Materialaufwendungen,
- geringe Herstellungskosten,
- Platzersparnis,
- hohe Zuverlässigkeit,
- einfache, sichere Handhabung
- Stoßunempfindlichkeit gegen externe Stöße,
- leichte Zugänglichkeit.

Besonders vorteilhaft ist es, wenn der Schiebeschalter oder Steckkontakt direkt am Stator insbesondere am Gehäuse des Motors angeordnet ist. Auch ist von Vorteil, wenn der Schiebeschalter oder der Steckkontakt ohne Verwendung von Anschlusskabeln direkt mit den elektrischen Anschlüssen verbunden ist. Ferner bestehen erhebliche Vorteile, wenn der Schiebeschalter oder der Steckkontakt direkt an der Anschlussleiste des Motors angeordnet ist. Vorzugsweise ist der Schiebeschalter oder der Steckkontakt an oder in der vorderen Oberseite des elektrischen Anschlusskastens befestigt.

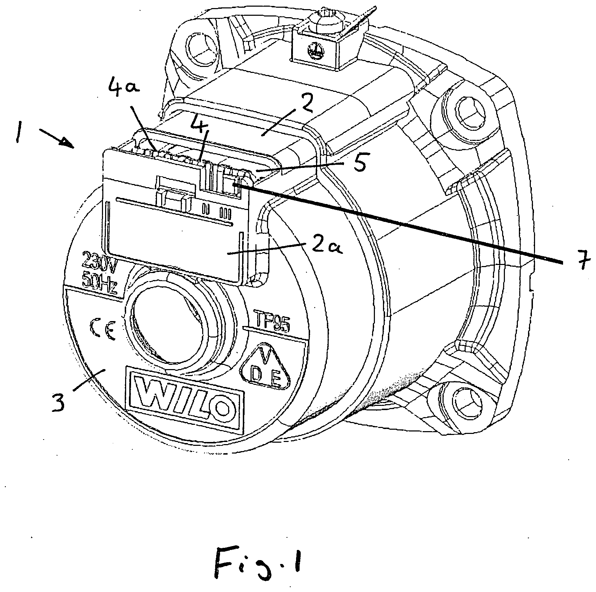

Ein Ausführungsbeispiel der Erfindung ist in den Zeichnungen dargestellt und wird im Folgenden näher beschrieben. Es zeigen
- Fig. 1: eine erste perspektivische Darstellung des Elektromotors einer Kreiselmotorpumpe,

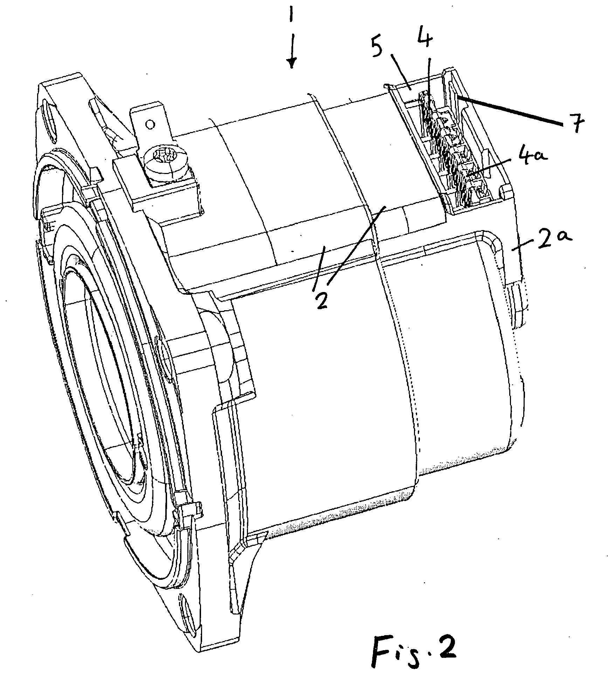

- Fig. 2: eine zweite perspektivische Darstellung des Elektromotors einer Kreiselmotorpumpe.

Die Kreiselmotorpumpe weist einen Elektromotor 1 auf, auf dessen Oberseite ein flacher Anschlusskasten 2 (Klemmenkasten) befestigt ist, der sich achsparallel zur Motorachse erstreckt und über die Vorderseite 3 bzw. Stirnseite des Gehäuses des Motors 1 mit einem senkrechten Bereich 2a weitergeführt ist. In der Oberseite des Bereichs 2a ist eine Kontaktleiste 4 mit Kontakten 4a eingelassen, die von oben über eine obere Öffnung 5 zugänglich ist, um mindestens einen nicht dargestellten Kabelstecker auf die Kontakte 4a der Kontaktleiste 4 aufsetzen zu können. Die obere Öffnung 5 ist durch den Kabelstecker ausgefüllt und verschlossen, wenn der Kabelstecker auf die Kontakte 4a der Kontaktleiste 4 aufgesetzt ist.

An den Kontakten 4a der Kontaktleiste 4 oder nahe der Kontakte ist ein Schiebeschalter 7 befestigt, dessen elektrische Anschlüsse vorzugsweise mit den Kontakten 4a verbunden sind. Hierbei ist der Schiebeschalter 7 an denjenigen Kontakten angeschlossen, durch die die Drehzahl des Motors einstellbar ist, wobei je nach der Schiebestellung des Schiebeschalters die Drehzahl bestimmt wird.

Statt eines Schiebeschalters 7 ist an der obengenannten Stelle alternativ ein Steckkontakt befestigt, der je nach seiner Steckstellung auf den Kontakten 4a die Drehzahl bestimmt.

Ist der Kabelstecker auf die Anschlüsse bzw. Kontakte 4a aufgesteckt, so überdeckt er auch den Schiebeschalter 7 bzw. den Steckkontakt.

## Patentansprüche

1. Kreiselmotorpumpe mit mindestens zwei am Elektromotor angeordneten, von außen zugänglichen elektrischen Anschlüssen (4a), auf denen ein Kabelstecker befestigbar ist, **dadurch gekennzeichnet, dass** an oder nahe der elektrischen Anschlüsse (4a) ein Schiebeschalter (7) oder ein Steckkontakt befestigt ist, durch den die Drehzahl des Elektromotors (1) einstellbar ist und dass der Kabelstecker die elektrischen Anschlüsse (4a) und den Schiebeschalter (7) oder den Steckkontakt überdeckt.

2. Kreiselmotorpumpe nach Anspruch 1, **dadurch gekennzeichnet, dass** der Schiebeschalter (7) oder Steckkontakt direkt am Stator insbesondere am Gehäuse des Motors (1) angeordnet ist.

3. Kreiselmotorpumpe nach Anspruch 1 oder 2, **dadurch gekennzeichnet, dass** der Schiebeschalter (7) oder der Steckkontakt ohne Verwendung von Anschlusskabeln direkt mit den elektrischen Anschlüssen (4a) verbunden ist.

4. Kreiselmotorpumpe nach einem der vorherigen Ansprüche, **dadurch gekennzeichnet, dass** der Schiebeschalter (7) oder der Steckkontakt direkt an der Anschlussleiste des Motors angeordnet ist.

5. Kreiselmotorpumpe nach einem der vorherigen Ansprüche, **dadurch gekennzeichnet, dass** der Schiebeschalter (7) oder der Steckkontakt an oder in der vorderen Oberseite des elektrischen Anschlusskastens (2) befestigt ist.

## Claims

1. Centrifugal motor pump comprising at least two electrical connections (4a) which are arranged on the electric motor, are accessible from the outside and to which a cable plug can be fastened, **characterized in that** a sliding switch (7) or a plug-in contact by means of which the rotation speed of the electric motor (1) can be adjusted is fastened to or in the vicinity of the electrical connections (4a), and **in that** the cable plug covers the electrical connections (4a) and the sliding switch (7) or the plug-in contact.

2. Centrifugal motor pump according to Claim 1, **characterized in that** the sliding switch (7) or plug-in contact is arranged directly on the stator, in particular on the housing of the motor (1).

3. Centrifugal motor pump according to Claim 1 or 2, **characterized in that** the sliding switch (7) or the plug-in contact is directly connected to the electrical connections (4a) without using connection cables.

4. Centrifugal motor pump according to one of the preceding claims, **characterized in that** the sliding switch (7) or the plug-in contact is arranged directly on the connection strip of the motor.

5. Centrifugal motor pump according to one of the preceding claims, **characterized in that** the sliding switch (7) or the plug-in contact is fastened to or in the front top side of the electrical connection box (2).

## Revendications

1. Motopompe centrifuge comportant au moins deux bornes électriques (4a) accessibles de l'extérieur, disposées sur le moteur électrique et sur lesquelles peut être fixée une fiche de câble, **caractérisée en ce qu'**un interrupteur à glissière (7) ou un contact enfichable est fixé sur ou à proximité des bornes électriques (4a), au moyen duquel la vitesse de rotation du moteur électrique (1) peut être réglée, et **en ce que** la fiche de câble recouvre les bornes électriques (4a) et l'interrupteur à glissière (7) ou le contact enfichable.

2. Motopompe centrifuge selon la revendication 1, **caractérisée en ce que** l'interrupteur à glissière (7) ou le contact enfichable est disposé directement sur le stator, en particulier sur le boîtier du moteur (1).

3. Motopompe centrifuge selon la revendication 1 ou 2, **caractérisée en ce que** l'interrupteur à glissière (7) ou le contact enfichable est relié directement aux bornes électriques (4a) sans utiliser de câbles de connexion.

4. Motopompe centrifuge selon l'une des revendications précédentes, **caractérisée en ce que** l'interrupteur à glissière (7) ou le contact enfichable est disposé directement sur la barrette de connexion du moteur.

5. Motopompe centrifuge selon l'une des revendications précédentes, **caractérisée en ce que** l'interrupteur à glissière (7) ou le contact enfichable est fixé sur ou dans la partie supérieure avant du bornier électrique (2).
